(19) Europäisches Patentamt
European Patent Office
Office européen des brevets

(11) **EP 4 530 880 A1**

(12) **EUROPEAN PATENT APPLICATION**

(43) Date of publication:
**02.04.2025 Bulletin 2025/14**

(21) Application number: **24201022.1**

(22) Date of filing: **18.09.2024**

(51) International Patent Classification (IPC):
**G06F 16/2453** (2019.01)    **G06F 16/2455** (2019.01)

(52) Cooperative Patent Classification (CPC):
**G06F 16/2456; G06F 16/24544**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.09.2023 US 202363539038 P**
**03.09.2024 US 202418822792**

(71) Applicant: **Dynatrace LLC**
**Waltham, MA 02451 (US)**

(72) Inventor: **Kretschmer, Roland**
**4020 Linz (AT)**

(74) Representative: **Bittner, Thomas L.**
**Boehmert & Boehmert**
**Anwaltspartnerschaft mbB**
**Pettenkoferstrasse 22**
**80336 München (DE)**

(54) **JOIN ORDER OPTIMIZATION USING SETSKETCH**

(57)    A computer-implemented method is presented for joining tables in a database system. The method includes: a) receiving a request to join tables according to a join query; b) generating a probabilistic data structure for each table specified in the set of join operations; c) for each join operation, calculating a cardinality estimate of table resulting from a particular join operation using the probabilistic data structures for the tables to be joined; d) selecting a join operation in the set of join operations, where the selected join operation has the lowest cardinality estimate amongst the join operations; e) removing the selected join operation from the set of join operations; f) replacing the tables to be joined by the selected join operation with the joint of these tables in the set of join operations; and repeating steps c) to f) until the set of join operations comprises a single join operation.

Fig. 1

## Description

This application claims the benefit and priority of U.S. Provisional Application No. 63/539038 filed on September 18, 2023. The entire disclosure of the above application is incorporated herein by reference.

Technical Field

The disclosure concerns the technical field of information technology. In particular, the disclosure concerns the optimization of the order of joining multiple tables (also referred to as relations) with each other. While the disclosure is applicable to all database systems, it is particularly useful to use it in *big data* applications.

Background Art

It is well known that the order of joining multiple tables with each other in a database system has a strong effect on memory consumption, CPU load, CO2 footprint etc. E.g. when joining three tables A, B, and C with each other such that the entries in table A match the entries in table B and likewise the entries in table A match the entries in table C (corresponding to the SQL join query "select * from A, B, C on A = B and A = C"), the order of joining the tables may result in intermediate tables having vastly different sizes. Assuming that the tables A, B, C have 1000 rows each, joining for example tables A and B may produce an intermediate table A $\bowtie$ B having only 100 rows, and combining the intermediate table with table C may result in a final table having 1000 rows, another join plan, i.e. a different order of joining the tables A, B and C, may produce an intermediate table of very different size. For example joining tables A and C with each other may produce an intermediate table A $\bowtie$ C having 100000 rows and combining this vastly bigger intermediate table with table B results in the same final table having 1000 rows. Note that the final table joining A, B, and C in both cases is identical. However, as the size of the inter-mediate table is vastly different, so is the memory consumption, CPU load etc.

Many proposals exist on how the find an optimized join order (also referred to as join plan) for joining multiple tables resulting in small or at least consistently smaller intermediate than without join plan optimization.

US 10,824,592 B2 proposes a method for optimizing the join plan for joining two tables using HLL (HyperLogLog) sketches and performing join cardinality estimation via this sketch.

However, the method only considers estimating joins between exactly two tables and not more than that. In addition, the method is limited to distinct value estimation. Although these methods work for two tables, they are not sufficiently robust for optimizing the join plan for joining three, four, five and more tables.

US 2019/0073398 A1 is similar to US 10,824,592 B2. The proposal is more general in the sense that it proposes generating probabilistic data structures (HLL is mentioned as an example) during a table scan based on relatedness of columns. It is further mentioned that the column's data type acts as a measure of relatedness. After creating sketches for the columns, they calculate unions and intersection only tuple wise and do not mention applying this process to triples or more.

US 10,853,368 B2 discloses the sampling of probabilistic data points based on sampling a dataset. The document interpolates a function based on those data points and extrapolates a distinct value amount based on the interpolated function. The main difference is that the document does not calculate estimates of intersections of tables and therefore does not propose to use join cardinality estimations.

Otmar Ertl. SetSketch: Filling the Gap between MinHash and HyperLogLog. PVLDB, 14(11): 2244 - 2257, 2021 introduces the SetSketch probabilistic data structure and outlines some of its characteristics.

This section provides background information related to the present disclosure which is not necessarily prior art.

Summary

This section provides background information related to the present disclosure which is not necessarily prior art.

The objective of the disclosure is to find a computer-implemented method for optimizing the order of joining multiple tables according to a join query in a database system. The method shall not be limited to one join operation only but shall also work for a set of two, three and more join operations.

The technical problem is solved by the subject matter of claim 1 directed to a computer-implemented method for joining tables in a database system. Advantageous embodiments are the subject of the dependent claims.

The computer-implemented method for joining tables in a database system, comprises: a) receiving, by a computer processor, a request to join three or more tables according to a join query, where the join query specifies a set of join operations and each join operation joins two tables with each other; b) generating, by the computer processor, a probabilistic data structure for each table specified in the set of join operations, where the probabilistic data structure is partitioned into a plurality of registers and configuration parameters for the probabilistic data structure includes a first recording parameter, base, that controls recording of data into the probabilistic data structure; c) for each join operation in the set of join operations, calculating, by the computer processor, a cardinality estimate of table resulting from a particular join operation using the probabilistic data structures for the tables to be joined; d) selecting, by the computer processor, a join operation in the set of join operations, where the selected join operation has the lowest cardinality estimate amongst the join operations in the set of join operations; e) removing, by the computer processor, the selected join operation from the set of join operations; f) replacing, by the computer processor, the tables to be joined by the selected join operation with the join of these tables in the set of join operations; and g) repeating, by the computer processor, steps c) to f) until the set of join operations comprises a single join operation, thereby defining an order for joining tables in the join query.

In the first step a, a computer processor receives a request to join three or more tables according to a join query, where the join query specifies a set of join operations and each join operation joins two tables with each other. The join query, e.g. a SQL statement, defines which tables shall be joined with each other. In addition, the join query defines the conditions for joining the records comprised in the tables. The join operation joining two tables with each other is typically an inner join operation. Effectively, the join query constitutes a set of multiple, i.e. two, three or more, join operations. Each table features at least one column and multiple rows.

In a second step b, the computer processor generates probabilistic data structures (e.g. SetSketches) for each table specified in the set of join operations, where the probabilistic data structure is partitioned into a plurality of registers and configuration parameters for the probabilistic data structure includes a first recording parameter, base, that controls recording of data into the probabilistic data structure for each column of a table involved in a join operation.

In step c, the computer processor calculates for each join operation in the set of join operations a cardinality estimate of a table resulting from a particular join operation using the probabilistic data structures for the tables to be joined. The SetSketch probabilistic data structure, the way how to the derive a cardinality estimate for a single table or in case the table comprises multiple columns, a single column of the table, and how to derive cardinality estimates for unions and/or intersections of tables are described in the paper "SetSketch: Filling the Gap between MinHash and HyperLogLog" of Otmar Ertl mentioned above.

In step d, the computer processor selects the join operation in the set of join operations which has the lowest cardinality estimate amongst the join operations in the set of join operations. According to one embodiment of the disclosure, this join operation is just selected but not actually executed. According to another embodiment, the selected join operation having the lowest cardinality estimate for joining a first table with a second table is executed. In case several join operations have the same minimal cardinality estimate, one of those join operations is performed.

After selecting the join operation, the join operation is removed for the set of join operations in step e. As the join query constitutes a set of join operations, each join operation is present only once in the set of join operations.

In step f, the entries for the first table and the second table which were selected in the join operation are replaced by the joint of the first table and the second table. This is done in both the set of tables and the set of join operations.

Finally in step g, steps c-f are repeated until the set of join operations comprises a single join operation, thereby defining an order for joining tables in the join query. In retrospect, i.e. knowing the disclosure, this appears to be self-evident as for a single join operation, this join operation always has the minimum cardinality estimate.

According to preferred embodiment, the probabilistic data structure is updated in accordance with the first recording parameter, base, and a second recording parameter, rate, such that changing a value of the first recording parameter and changing the number of registers sets the maximum number of distinct data elements that can be represented by the probabilistic data structure. The first recording parameter, base, mainly effects the accuracy of the cardinality estimate for join operations. The combination of base and the number of registers set the maximum number of distinct data elements that can be represented by the probabilistic data structure.

Typically, base is greater than one and less than two, i.e. $2 \geq base > 1$.

According to another embodiment, calculating a cardinality estimate of the table resulting from a particular join operation includes merging the probabilistic data structure for each table specified by the particular join operation.

For calculating the cardinality estimate of table resulting from a particular join operation the inclusion-exclusion principle is used. Although the cardinality estimate for a union of two tables can be derived directly using the probabilistic data structures, such as SetSketches, of the tables to be joined, the cardinality estimate for a joint of two tables cannot be derived directly. For this the inclusion-exclusion principle is used.

According to another preferred embodiment, selecting a join operation further comprises performing the selected join operation to form a new table and generating a probabilistic data structure for the new table. In other words, the preferred order of joining tables is not just found but that join operation is executed thereby joining two tables into a new table. In addition, a probabilistic data structure for the new table is drawn up. Without limitation, the join operation can be a hash join or a sort merge join.

If the set of join operations involves multiple columns of a table, it is preferred to generate a probabilistic data structure for each column of the table specified in the set of join operations. For example: If table A features 4 columns, namely id, name, age, and sex; and table B features 4 columns, namely id, address, city, and post code. Assuming that column id of table A and column id of table B are involved in a join operation, the other columns aren't. In this case, it is sufficient to draw up probabilistic data structures for the columns id of tables A and B.

It is advantageous to use SetSketch probabilistic data structures instead of other probabilistic data structures, such as MinHash, Ultra Log Log or HyperLogLog since SetSketch data structures have a lower memory footprint (typically 16-bit registers for buckets are sufficient instead of 32- or even 64-bit registers as used in other sketches). In addition, SetSketch data structures can be drawn up quicker and cardinality estimates for the join of two tables can be calculated very efficiently.

In order to join the tables in an optimized manner, the method comprises joining the tables according to the order for joining tables.

In a preferred embodiment, the join operation is an inner join.

The technical problem is also solved by the subject matter of claim 11 directed to a computer-implemented method for joining tables in a database system.

The computer-implemented method for joining tables in a database system, comprises: a) receiving, by a computer processor, a request to join three or more tables according to a join query, where the join query specifies a set of join operations and each join operation joins two tables with each other; b) generating, by the computer processor, a probabilistic data structure for each table specified in the set of join operations, where the probabilistic data structure is partitioned into a plurality of registers and configuration parameters for the probabilistic data structure includes a first recording parameter, base, that controls recording of data into the probabilistic data structure; c) for each join operation in the set of join operations, calculating, by the computer processor, a cardinality estimate of table resulting from a particular join operation using the probabilistic data structures for the tables to be joined; d) selecting, by the computer processor, a join operation in the set of join operations, where the selected join operation has the lowest cardinality estimate amongst the join operations in the set of join operations; e) performing, by the computer processor, the selected join operation to form a new table and generating a probabilistic data structure for the new table; f) removing, by the computer processor, the selected join operation from the set of join operations; g) replacing, by the computer processor, the tables to be joined with the new table in the set of join operations; and h) repeating, by the computer processor, steps c) to g) until the set of join operations comprises a single join operation, thereby joining tables in the join query.

In addition to the subject matter of the first cited method according to the present disclosure, in this method, it is specified that the selected join operation having the lowest cardinality estimate is performed by the computer processor to form a new table. After executing the join operation, a new probabilistic data structure (e.g. a SetSketch) is drawn up for the new table.

The probabilistic data structure may updated in accordance with the first recording parameter and a second recording parameter, rate, such that changing a value of the first recording parameter and changing the number of registers sets the maximum number of distinct data elements that can be represented by the probabilistic data structure. The value of the first recording parameter may be greater than one and less than two.

Calculating a cardinality estimate of table resulting from a particular join operation may include merging the probabilistic data structure for each table specified by the particular join operation.

The method may comprise calculating a cardinality estimate using inclusion-exclusion principle.

The set of join operations may involve multiple columns of a table and may further comprise generating a probabilistic data structure for each column of the table specified in the set of join operations.

The probabilistic data structure may be SetSketch data structure.

The technical problem is also solved by the following computer-implemented method for joining tables in a database system: The computer-implemented method for joining tables in a database system, comprises: a) receiving, by a computer processor, a request to join three or more tables according to a join query, where the join query specifies a set of join operations and each join operation joins two tables with each other; b) generating, by the computer processor, a SetSketch data structure for each table specified in the set of join operations; c) for each join operation in the set of join operations, calculating, by the computer processor, a cardinality estimate of table resulting from a particular join operation using the SetSketch data structures for the tables to be joined; d) selecting, by the computer processor, a join operation in the set of join operations, where the selected join operation has the lowest cardinality estimate amongst the join operations in the set of join operations; e) removing, by the computer processor, the selected join operation from the set of join operations; f) replacing, by the computer processor, the tables to be joined by the selected join operation with the joint of these tables in the set of join operations; and g) repeating, by the computer processor, steps c) to f) until the set of join operations comprises a single join operation, thereby defining an order for joining tables in the join query.

Further areas of applicability will become apparent from the description provided herein. The description and specific examples in this summary are intended for purposes of illustration only and are not intended to limit the scope of the present disclosure.

Brief Description of Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:

Fig. 1 shows an overview of the disclosed method for optimizing the order of joining multiple tables according to a join query.

Fig. 2 shows three tables, A, B, and C as well as the unions $A \cup B, A \cup C, B \cup C, A \cup B \cup C$ and the intersections $A \cap B, A \cap C, B \cap C,$ and $A \cap B \cap C$ of the tables in the 1st application example.

Fig. 3 shows the join graph for joining the tables A, B, and C in the 1st application example.

Fig. 4 shows an overview of the steps of the disclosed method according to the 2nd application example.

Fig. 5a shows an overview of the steps of the disclosed method according to the 3rd application example.

Fig. 5b shows an overview of the steps of the disclosed method according to the 4th application example.

Fig. 6 shows the structure of some tables comprised in the IMDB dataset used in the 5th application example.

Figs. 7a and b show overviews of the steps performed in the 5th application example.

Detailed Description

Example embodiments will now be described more fully with reference to the accompanying drawings.

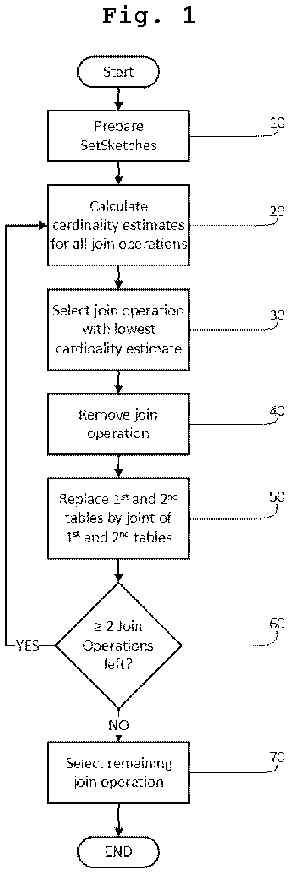

The main steps in the computer-implemented method for optimizing the order of joining multiple tables according to a join query are shown in Fig. 1. After starting the method, in step 10 SetSketch probabilistic data structures are prepared for all columns of tables involved as a condition in a join operation. As the join query essentially constitutes a set of join operations, in step 20 cardinality estimates are calculated based on the SetSketches for all join operations comprised in the set of join operations. In step 30, the join operation having the lowest cardinality estimate of all join operations is selected as the 1st join operation. If multiple join operations have the same lowest cardinality estimate, one of these join operations is selected as the 1st join operation. By executing a join operation, a first table is joined with a second table to form a joint of the first and second table. In step 40, the selected join operation is removed from the set of join operations. In step 50, the entries for the first and second tables in the set of tables and in the set of join operations are replaced by the joint of the first and second table. Step 60 checks whether more than 1 join operation is left in the set of join operations: If at least two join operations are left, steps 20...50 are repeated until there is only 1 join operations is left. In step 70, the remaining join operation is selected to be performed.

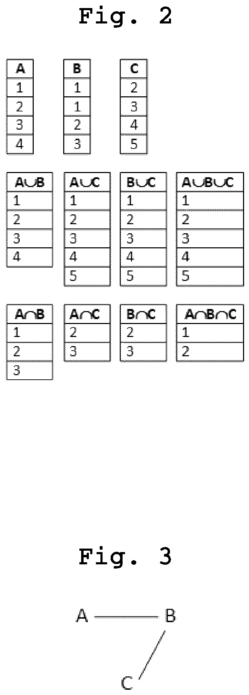

The basic idea of the disclosure will be explained in a first application example. Assuming three very short tables A, B, C, each table having a single column and four rows, the task is to find an optimized order for executing the SQL join query "select * from A, B, C on A = B and B = C" (see Fig. 3). In other words, the task is to find an order of joining the tables A, B, C such that the intermediate table is as small as possible. The question is therefore whether to join tables A and B, or tables B and C first. Note that the tables A and C shouldn't be joined because these tables don't have a join predicate. In a subsequent step, the result of joining the first two tables will be joined with the remaining table. In the example, the tables shall be joined by so-called *inner join* operations.

The tables A, B, C are as follows (see also Fig. 2):

A = [1, 2, 3, 4]
B = [1, 1, 2, 3]
C = [2, 3, 4, 5]

The cardinalities of the tables, the unions, and intersections/joints of two distinct tables with each other are as follows:

*Tab. 1 Join plans of one and two tables*

| Plan | Formula for cardinality | Cardinality (real) | Cardinality (estimate) |
|---|---|---|---|
| *A* | $|A|$ | 4 | 4 |
| *B* | $|B|$ | 3 | 3 |
| *C* | $|C|$ | 4 | 6 |
| $A \cup B$ | $|A \cup B|$ | 4 | 4 |
| $B \cup C$ | $|B \cup C|$ | 5 | 7 |
| $A \bowtie B$ | $|A \cap B| = |A| + |B| - |A \cup B|$ | 4+3-4=3 | 4+3-4=3 |

(continued)

| Plan | Formula for cardinality | Cardinality (real) | Cardinality (estimate) |
|---|---|---|---|
| $B \bowtie C$ | $\|B \cap C\| = \|B\| + \|C\| - \|B \cup C\|$ | 3 +4-5 = 2 | 3 + 6 - 7 = 2 |

Note that the intersections/joints of two tables are calculated using the so-called *inclusion-exclusion principle,* e.g. $\|A \cap B\| = \|A\| + \|B\| - \|A \cup B\|$. In this example, the cardinality of the intersection of tables A and B, i.e. $\|A \cap B\|$, is defined by the sum of the cardinalities of tables A, B, i.e. $\|A\| + \|B\|$, minus the cardinality of the union of tables A and B, i.e. $\|A \cup B\|$. Generally, the inclusion-exclusion principle is not limited to two tables only, such that intersections of three and more tables, e.g. $\|A \cap B \cap C\|$, $\|A \cap B \cap C \cap D\|$, can be calculated.

The software codes in the programming language Java for calculating a hash value (function addHash), for estimating a minimum value in the registers (function estimateMinRegisterVal), for generating a probabilistic SetSketch data structure (function SetSketch create From Bulk), for estimating the cardinality of a SetSketch (function cardinality), and for estimating the union of two SetSketches (function SetSketch merge) are as follows:

```java
public void addHash(long hashValue) {
    rnd.reset(hashValue);
    permutationGenerator.reset();

    boolean minValOverwritten = false;
    double xj = 0d;
    double maxX = Math.pow(base, -1d * minRegisterVal);
    for (int j = numRegisters; j > 0; j--) {
        xj += (rnd.nextExponential() / rate) / j;
        if (xj > maxX) {
            break;
        }

        int kj = Math.max(0, Math.min(registerMaxValue, (int)
```

```
Math.floor(1 - logB(xj))));
        if (kj <= minRegisterVal) {
            break;
        }


        int index = permutationGenerator.next(rnd);
        int currentVal = registers.getRegister(index);
        if (kj > currentVal) {
            registers.setRegister(index, kj);


            if (currentVal == minRegisterVal) {
                minValOverwritten = true;
            }
        }
    }


    if (minValOverwritten) {
        updateInternal();
    }
}



int estimateMinRegisterVal(int n) {
    return (int) Math.floor((Math.log(n * rate * base) - Math.log(-
Math.log(THRESHOLD_ESTIMATION_ERROR / numRegisters))) / logBase);
}



public static SetSketch createFromBulk(SetSketch sketch, int[]
values) {
    sketch.reset();
    if (values.length == 0) {
        return sketch;
    }


    sketch.minRegisterVal =
```

```
sketch.estimateMinRegisterVal(values.length);
    for (int val : values) {
        sketch.addHash(SketchUtil.getHash(val));
    }


    int min = sketch.findMinRegisterVal();
    if (min < sketch.minRegisterVal) {
        sketch.minRegisterVal = min;
        for (int val : values) {
            sketch.addHash(SketchUtil.getHash(val));
        }
    } else {
        sketch.minRegisterVal = min;
    }


    return sketch;
}



public long cardinality() {
    double sum = 0;
    for (int i = 0; i < numRegisters; i++) {
        sum += Math.pow(base, -1d * registers.getRegister(i));
    }
    double div = rate * logBase * sum;
    return div == 0 ? 0 : Math.round(numRegisters * (1 - (1 / base))
/ div);
}



public static SetSketch merge(SetSketch a, SetSketch b) {
    if (hasDifferentStructure(a, b)) {
        return null;
    }


    SetSketch result = a.deepCopy();
```

```
for (int i = 0; i < a.numRegisters; i++) {
    int val = b.registers.getRegister(i);
    if (result.registers.getRegister(i) < val) {
        result.registers.setRegister(i, val);
    }
}
result.minRegisterVal = result.findMinRegisterVal();


return result;
}
```

Although the code above is written in Java, the disclosure is not limited to Java as these or similar methods can be executed in any programming language.

Creating a SetSketch for a table: First it is explained how a SetSketch is created for a table, e.g. table A. For this we call the function createFromBulk where the first parameter is an empty SetSketch with its attributes set to the number of registers numRegisters = 16, the base = 1.59, and the rate = 20. The second parameter is table A as an integer array [1, 2, 3, 4]. First, the minimum value that will be present in the registers is preliminarily estimated by calling the function estimateMinRegisterVal(n), where n is the size of the table or column. In our case, n = 4, as table A has 4 rows. This function estimates the minimum register value using the following equation:

$$minRegisterValue = \left\lfloor \frac{\log(n*rate*base) - \log\left(-\log\left(\frac{th_{error}}{numRegisters}\right)\right)}{logBase} \right\rfloor,$$

where $th_{error}$ represents the threshold for the allowed estimation error and is set to 0.05 = 5% and logBase is the natural logarithm of the parameter of the SetSketch base, log(*base*) = 0.4637. Evaluating the estimated minimum register value for the parameters, we get minRegisterValue = 6. Note that the log functions mentioned above calculate the natural logarithms to the base e.

Adding hash values to the SetSketch: Next we add for every value in the table A = [1, 2, 3, 4] a hash value to the sketch by calling the function addHash. This function uses a random number generator rnd and a random permutation generator based on "Fisher-Yates shuffle". In a first step, maxX is calculated by $base^{-minRegisterValue}$ = 1.59$^{-6}$ = 0.0619. Then we iterate over the number of registers starting from 15 to 0 decrementing the variable j in this example. First, we increment the variable xj every iteration by the following formula: $xj += \frac{\frac{nextExponential(\square)}{rate}}{j} =$ 0.0021. Where nextExponential returns an exponentially distributed double value with the mean value of 1. If xj > maxX we can break the loop. In our example xj < maxX, since 0.0021 < 0.0619, we continue the loop by calculating $kj = \max(0, \min(registerMaxValue, \lfloor 1 - \log_B(xj) \rfloor))$. Where registerMaxValue is initialized with 65535 and $\log_B()$ is the logarithm to the base B = 1.59. Here in our example kj = 14. In the next line we check if kj <= minRegisterValue, and since 14 > 6 we continue with the loop. In the example, each SetSketch register has a width of 16-bits allowing the storage of integer values between 0...65535.

Then a random index is generated by calling the function permutationGenerator (index=5 in this example). Then we retrieve the current value of the register at position 5 and store it in currentVal. Initially all registers are initialized with 0, so currentVal = 0. We then check if kj > currentVal and set the register at position "index" to kj. (registers[5]=14). If currentVal == minRegisterVal, we would have to update the minRegisterVal to a new minimum after updating all registers for this added hash value. In this example it is not necessary, because *currentVal ≠ minRegisterVal* (0 ≠ 6). Continuing creating the SetSketch: We repeat adding hash value for every value provided in the value array ([1, 2, 3, 4]). Next we check if the minRegisterValue changed by linear search through the registers min = sketch.findMinRegisterVal() then if min < sketch.minRegisterVal. In this example min = 6 and minRegisterVal = 8, which means we update the minRegisterValue to 6. If min > minRegisterValue we would then update minRegisterValue to min and repeat the hash adding process for every value again.

This concludes the creation of the SetSketch for table A. Executing this procedure for the tables A, B, C by using the SetSketch parameters above yields SetSketches having the following registers:

*Tab. 2 SetSketch registers for tables A, B and C*

| Index | A | B | C |
|---|---|---|---|
| 0 | 12 | 12 | 12 |
| 1 | 14 | 8 | 14 |
| 2 | 13 | 11 | 13 |
| 3 | 17 | 14 | 17 |
| 4 | 16 | 16 | 16 |
| 5 | 14 | 11 | 11 |
| 6 | 9 | 9 | 8 |
| 7 | 8 | 8 | 9 |
| 8 | 11 | 9 | 11 |
| 9 | 12 | 12 | 12 |
| 10 | 9 | 9 | 9 |
| 11 | 8 | 8 | 12 |
| 12 | 8 | 8 | 12 |
| 13 | 10 | 10 | 12 |
| 14 | 12 | 12 | 10 |
| 15 | 12 | 12 | 12 |

Estimating the cardinality of a table: As an example we will estimate the cardinality of table A based on the registers shown in Tab. 2. To estimate the cardinality we call the function cardinality on the SetSketch for table A. First, we initialize sum = 0 and then iterate over the number of registers numRegisters in the SetSketch, i.e. i = 0..15. Then we increment the sum via the following formula $base^{-registers[i]} = 1.59^{-12}$. Repeating this for all register values [12, 14, 13, 17, 16, 14, 9, 8, 11, 12, 9, 8, 8, 10, 12, 12] we get the value for sum = 0.1417. Then we calculate div via $rate * logBase * sum$ and if div == 0, we return 0 to be the result of the cardinality estimation. If div is not zero, we return the following

$$round\left(numRegisters * \frac{1 - \frac{1}{base}}{div}\right) = \quad round\left(16 * \left(\frac{1 - \frac{1}{1.59}}{1.315}\right)\right) = 3$$

, where div= 0.4890 from the previous calculation. This process is repeated for all three tables A, B, C leading to the cardinality estimates |A|, |B|, |C| shown in the last column "Cardinality (estimate)" of Tab. 1.

Estimating the cardinality for a union of two tables: To estimate the cardinality of a union of two tables we call the function merge. It takes two Set-Sketches as inputs and returns a merged SetSketch as result. If the input SetSketches don't have the same structure, i.e., not the same amount of registers, a different base and rate, we return null. As a first step we create a deep copy of the first SetSketch "a" and then iterate over the amount of registers with i = 0..numRegisters. We store the value from b.register[i] in val, in our example val = 22. If result.register[i] < val, we set result.register[i] = val. After this is repeated for all values in the register of result, we set a possible new minRegisterVal to the result with a linear search over all registers from result. The merging process can be repeated for any number of SetSketches via recursion. For example, if we merge A, B and C we would call merge them the following way: merge(merge(A, B), C). Estimating the cardinality of a merged SetSketch is analogous to estimating the cardinality of a table.

Based on the SetSketches for tables A, B, and C, the SetSketches for the unions of tables AuB, and BuC are obtained.

Generally, the cardinality denotes the number of unique elements in a table. E.g. in table A, four different members are present, namely 1, 2, 3, and 4. In table B, the element "1" is present twice, such that the cardinality is 3. As table C comprises four different elements, the cardinality of C or short |C| is 4. The cardinalities of a table are denoted by two vertical bars, e.g. the cardinality of table A is denoted by |A| (see above). Note that the formulas for the cardinalities for the intersection of two tables are derived from the inclusion-exclusion principle. In Tab. 1 above and subsequently, the cup symbol "u" denotes the union of two tables or two sets, whereas the cap symbol "∩" denotes the intersection of two tables or two sets. Finally, the ⋈ symbol denotes an inner join of two tables.

Cardinality estimates for the unions of the tables AuB, and BuC can be obtained by calling the function cardinality and supplying the SetSketches for AuB, and BuC as input arguments. This yields the cardinality estimates for $|A \cup B|$, $|B \cup C|$ in the last column of Tab. 1.

Based on the cardinality estimates |A|, |B|, ICI for the tables and the cardinality estimates $|A \cup B|$, $|B \cup C|$ for the union of tables, cardinality estimates $|A \, n \, B|$, $|B \, n \, C|$ for the intersections of tables or sets can be derived using the *inclusion-exclusion principle.* The results are given in the last column of Tab. 1.

Based on these results, we know that it is preferred to join the tables B and C first (plan $B \bowtie C$) since the intermediate table resulting from this join operation has a lower cardinality estimate than $A \bowtie B$. In addition to the pure cardinality estimate we can also decide now which join algorithm (Hash join, sort merge join, etc.) shall be used for joining B and C, and if B is the left-hand side input or C. The runtime of those algorithms can be significantly different based on the choice of these parameters. The selection of join algorithms and whether B or C are left-hand side inputs is not discussed in detail in this disclosure.

Generally, join algorithms could be the hash join, or sort merge join. Hash join (H) creates a hash map of the right-hand side table and probes the left-hand side table against this hash map. The limitation is, however, that the entire right hand side table has to fit into memory.

Hash join is runtime commutative only if at least one table fits into the main memory of the computer, e.g. RAM. Sort merge join (SM) can only operate on sorted tables and if they are unsorted, the sort merge join (SM) algorithm sorts them before execution. The sort merge join is commutative.

One example for join plans considering different join algorithms is:

*Tab. 3 Join plans with join algorithms*

| Plan | Cardinality Estimation | Runtime (ms, fictional) |
|---|---|---|
| H(B, C) | 3 | 10 |
| H(C, B) | 3 | 5 |
| SM(B, C) | 3 | 15 |
| SM(C, B) | 3 | 20 |

Keep in mind that the resulting cardinality for H and SM join is the same for all the shown join plans in this table, only the runtime behavior is different.

The previous paragraphs confirmed that picking the join plan $B \bowtie C$ as a first intermediate join plan is advantageous because it has the lowest estimated cardinality of all join plans until this point. Subsequently, the intermediate result or table is to be joined with the remaining table A to execute the entire join query. For completeness it is noted that for joining the intermediate result $B \bowtie C$ with the remaining table A it is not necessary to calculate any cardinality estimate, since the cardinality of the final table must be the same for all possible final join plans. For example:

*Tab. 4 Join plans for three tables*

| Plan | Cardinality Formula | Cardinality Estimation |
|---|---|---|
| $(B \bowtie C) \bowtie A$ | $\|B \cap C \cap A\| = \|A\| + \|B\| + \|C\| - \|A \cup B\| - \|A \cup C\| - \|B \cup C\| + \|A \cup B \cup C\|$ | 2 |
| $A \bowtie (B \bowtie C)$ | $\|A \cap (B \cap C)\| = \|A\| + \|B\| + \|C\| - \|A \cup B\| - \|A \cup C\| - \|B \cup C\| + \|A \cup B \cup C\|$ | 2 |

In any case, the intermediate result $B \bowtie C$ will be joined with table A which results in the final result $A \bowtie B \bowtie C$.

In order to easily understand the disclosure, very much simplified SetSketch data structures with 16 registers or buckets, each register having a width of 16 bits, were used in the 1st application example. The basis b of the SetSketches was set to 1.59. In applications closer to the real world, typically more registers, e.g. 4096 registers are used. Typically each register has a width of 16 bits. Such a SetSketch data structure has a total memory footprint of 4096*2 Bytes = 8 kB. The base b of the SetSketch is between 1 and 2, i.e. $2 \geq b > 1$. In order to increase the accuracy of the cardinality estimates for joints it is preferred to use a base b close to 1, e.g. between 1 and 1.1, such as b = 1.001.

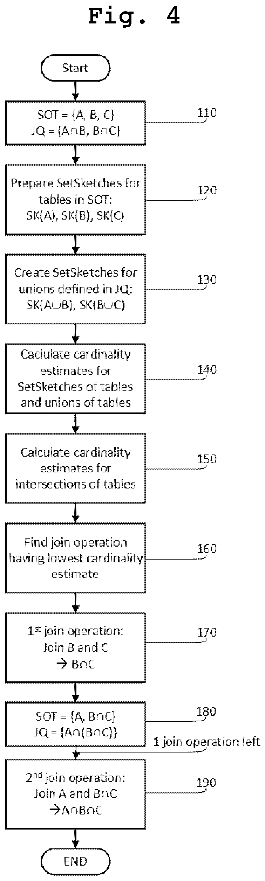

The main steps involved in the 1st application example are displayed in Fig. 4. After starting the method, the set of tables, short SOT, comprises the tables A, B, C, and the join query, short JQ comprises the join operations A∩B and B∩C (see 110). In step 120, SetSketches are drawn up for tables A, B, and C. Subsequently, SetSketches for the unions of tables according to JQ are computed. In our case, the relevant unions are AuB and BuC (step 130). In step 140, cardinality estimates are calculated for the tables in SOT and the unions of tables. These cardinality estimates are used to calculate the cardinality estimates for the intersections of tables as defined in JQ using the inclusion-exclusion principle (step 150). Note that the cardinality of the intersection of tables $|A \cap B| = |A| + |B| - |A \cup B|$, and the cardinality of the intersection of tables $|B \cap C| = |B| + |C| - |B \cup C|$. In order to calculate the cardinality of intersections of tables, the cardinalities or cardinality estimates of the tables and the unions of the tables are needed (see above). In step 160, the join operation having the lowest cardinality estimate is selected, which is to join tables B and C (step 170). Following this, the performed join operation will be removed from JQ and the joined tables will be replaced by the joint of the joined tables in SOT (step 180). After this, there is only one join operation is left in the join query JQ. Due to this, the optimization of join orders is superfluous. In step 190, the remaining join operation is selected as the 2nd join operation. In other words, in the 2nd join operation table A is joined with the joint of tables B and C. The optimized join plan is therefore: 1) Join tables B and C → $B \bowtie C$, 2) Join tables A and $B \bowtie C$.

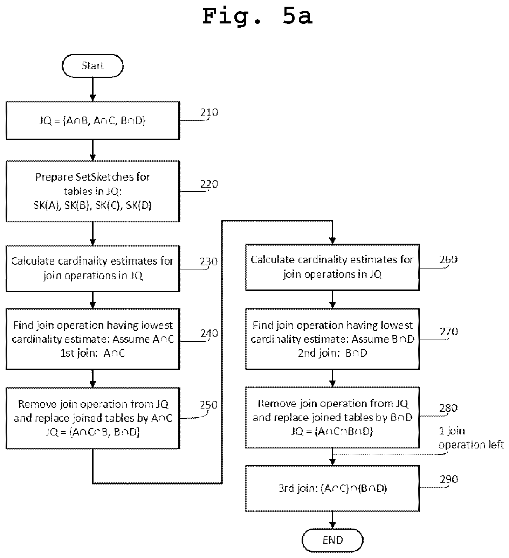

In a second application example, the steps for finding an optimized join plan for joining 4 tables A, B, C, and D according to the SQL join query "select * from A, B, C, D on A = B and A = C and B = D" are described next (see also Fig. 5a).

As the join query JQ comprises 3 join operations involving 4 tables (see 210), in step 220 SetSketches are drawn up for these tables, namely SetSketches (short SK) for tables A (denoted SK(A) in Fig. 5a), SK(B), SK(C), and SK(D).

In step 230, cardinality estimates are calculated for the individual join operations as defined in the join query, namely

$$|A \cap B| = |A| + |B| - |A \cup B|$$

$$|A \cap C| = |A| + |C| - |A \cup C|$$

$$|B \cap D| = |B| + |D| - |B \cup D|$$

The calculation of the cardinality estimates follows the schema presented above, i.e. first cardinality estimates $|A|$, $|B|$, $|C|$, $|D|$ for the individual tables are calculated, SetSketches for merged tables $A \cup B$, $A \cup C$, $B \cup D$ are created, and cardinality estimates $|A \cup B|$, $|A \cup C|$, $|B \cup D|$ for the SetSketches of these merged tables are calculated. In step 240 the join operation having the lowest cardinality estimate, which is the joint of A and C, is selected as the 1st join operation. In step 250, this join operation is removed from the join query JQ and the joined tables A and C are replaced by the joint of tables A and C.

In step 260, cardinality estimates for the remaining join operations in JQ are calculated, namely

$$|A \cap C \cap B| = |A| + |B| + |C| - |A \cup B| - |A \cup C| - |B \cup C| + |A \cup B \cup C|$$

$$|B \cap D| = |B| + |D| - |B \cup D|$$

Note that the latter cardinality estimate $|B \cap D|$ is already known from step 230. It is assumed that the joint of B and D has the lowest cardinality estimate. In step 270 the join operation having the lowest cardinality estimate, which is the joint of B and D, is selected as the 2nd join operation. This join operation is removed from the join query and the joined tables B and D are replaced by the joint in JQ (step 280).

After this, there is only one join operation left to be done in JQ, hence it is not necessary to compute the cardinality estimate. The remaining join operation $(A \cap C) \cap (B \cap D)$ is selected as the 3rd join operation (step 290).

Consequently, the optimized join plan is 1) $A \cap C$, 2) $B \cap D$, and 3) $(A \cap C) \cap (B \cap D)$. Please note that in order to optimize the join plan, no join operation was executed.

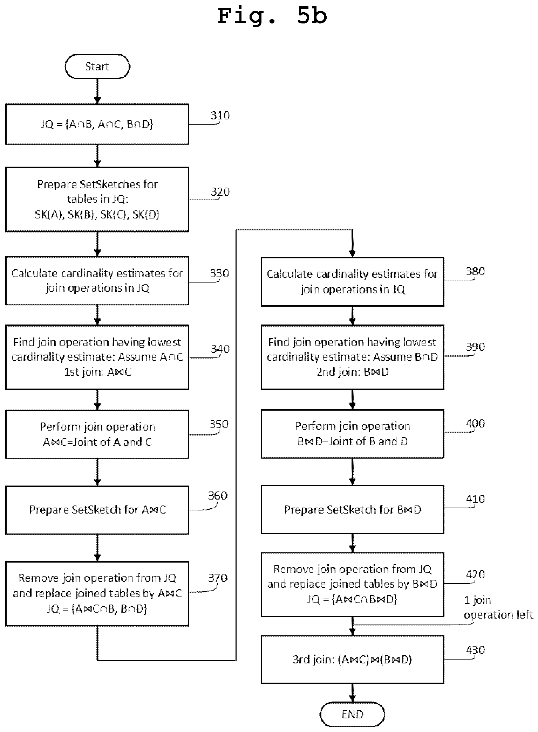

A variant to the method presented in the second application example will be presented as a third application example (see Fig. 5b). In this example, the same join query as in the second example will be optimized. However, different to the 2nd example, after finding the join operation having the minimum cardinality estimate, this join operation is actually executed and a SetSketch for the result of the join operation is drawn up. This SetSketch is then used in the subsequent steps of the optimization.

Steps 310-340 correspond to steps 210-240 of Fig. 5a. In step 350, the join operation $A \bowtie C$ being found to have the lowest cardinality estimate is executed and in step 360, a new SetSketch for this intermediate table $A \bowtie C$ is drawn up.

In step 370, the join operation performed is removed from the join query JQ and the tables joined by the join operation are replaced by the intermediate table $A \bowtie C$.

In step 380, cardinality estimates for the remaining join operations in JQ are drawn up, namely

$$|A \bowtie C \cap B| = \left|\underbrace{A \bowtie C}_{Table}\right| + |B| - \left|\underbrace{A \bowtie C}_{Table} \cup B\right|$$

$$|B \cap D| = |B| + |D| - |B \cup D|$$

Note that the cardinality estimate $|A \bowtie C \cap B|$ is simpler than the cardinality estimate $|A \bowtie C \cap B|$ is simpler than the cardinality estimate $|A \cap C \cap B|$ according to the 2nd application example as it comprises only 3 terms. This improves the accuracy of the optimization.

In step 390, the join operation having the minimum cardinality estimate is found and selected as the 2nd join operation. As $|B \cap D| < |A \bowtie C \cap B|$, the former join operation is selected. In step 400, this join operation is executed. Step 410 is purely optional. In step 420, the join operation just performed is removed from the set of join operations JQ and the joined tables B and D by $B \bowtie D$. After this, there is only one join operation left in JQ.

The remaining join operation $(A \bowtie C) \bowtie (B \bowtie D)$ is selected as the 3rd join operation. Consequently, the optimized join plan is 1) $A \bowtie C$, 2) $B \bowtie D$, and 3) $(A \bowtie C) \bowtie (B \bowtie D)$.

After having explained three rather simple application examples, a fourth application example will be presented based on the so-called IMDB (Internet Movie Data Base) data set. The data set was downloaded from http://homepages. cwi.nl/~boncz/job/imdb.tgz and constitutes the complete IMDB data set from May 2013. Due to the size and complexity of the data set, this data set has already been used multiple times for join-order-benchmarks, see https://github.com/ gregrahn/join-order-benchmark.

In this application example, the following join query (see SQL statement)

```
SELECT *
FROM              keyword AS k,
                  movie_keyword AS mk,
                  title AS t
WHERE t.id = mk.movie_id
      AND k.id = mk.keyword_id;
Join query 1
```

shall be executed in an optimized way such that the sizes of intermediate results/tables of the join operations are as small as possible.

The join query JQ can be written as a set of join operations JQ = {t.id∩mk.movie_id, k.id∩mk.keyword_id} (see steps 510 and 610).

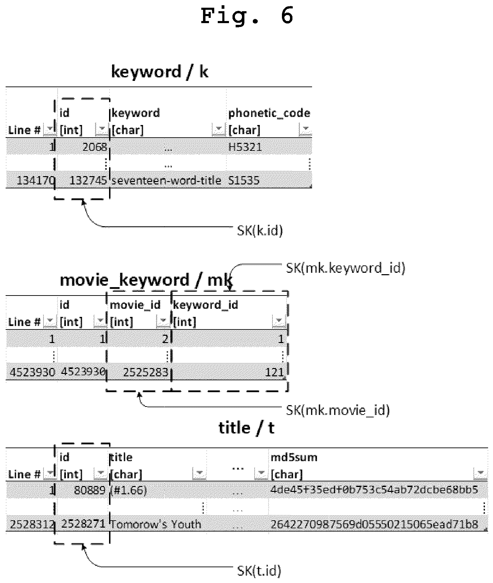

Note that the table "keyword" comprises three columns, namely id..., and 134,170 rows; the table "title" comprises 12 columns, namely id..., and 2,528,312 rows; and the table "movie_keyword" comprises three columns, namely id, movie_id, keyword_id, and 4,523,930 rows (see Fig.6 showing the structure of the tables keyword, movie_keyword and title). The size of the table "title" is 194 MB, the size of the table "keyword" is 4 MB, and the size of the table "movie_keyword" is 89 MB (all represented as CSV files). Already by looking at this data, it is apparent that exact solutions require a lot of memory and CPU load. That's why probabilistic data structures, such as sketches, are useful.

The set of tables referred to in the join query comprises three tables, namely keyword (short k), movie_keyword (short mk), and title (short t). The join query itself comprises two join operations, namely a join operation joining the tables t and mk where an entry in the column id of table t is identical to an entry in the column movie_id of the table mk, and another join operation joining the tables k and mk where an entry in the column id of table k is identical to an entry in the column keyword_id of the table mk.

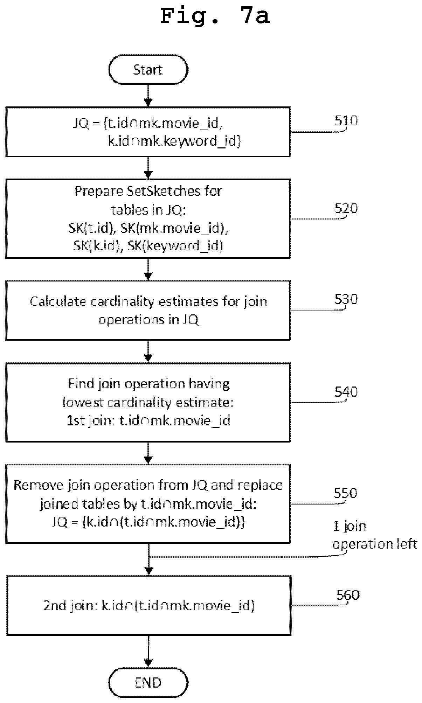

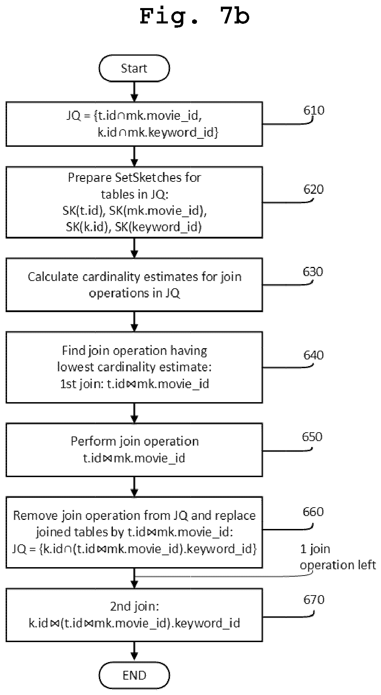

Two different methods for optimizing the join order are presented in Figs. 7a and 7b.

First, SetSketch probabilistic data structures, short SetSketches, are drawn up for all columns of the tables used as conditions in at least one join operations (steps 520 and 620). A SetSketch can be used for various estimations, e.g. for providing an estimate for the unique number of entries in a column (known as cardinality estimate for a column), for providing an estimate for the intersection between two columns (known as cardinality estimate for an intersection between two columns) etc.

Since the columns title.id (short t.id), keyword.id (short k.id), movie_keyword.keyword_id (short mk.keyword_id), and movie_keyword.movie_id (short mk.movie_id) are used as conditions in the join operations, SetSketches are calculated for these four columns. These SetSketches are denoted in Figs. 7a, 7b as SK(k.id), SK(mk.keyword_id), SK(mk.movie_id), and SK(t.id). The parameters for these SetSketches are rate = 20, 4090 registers having a width of 16 bit each, and base = 1.001. Consequently, each SetSketch consumes 8 kB of memory, so the total memory consumption is 32 kB as compared to 287 MB for the tables t, k, and mk.

Note that although table k has three columns, a single SetSketch for the column k.id is sufficient as only k.id is used in a join operation. Likewise, table t has 12 columns and only one SetSketch for the column t.id is needed. Finally, one SetSketch for mk.movie_id and another one for mk.keyword_id are needed.

The cardinality estimates for these columns can be evaluated and compared to the real number of unique entries. The result is shown in Tab. 5:

*Tab. 5 Cardinality estimates for columns*

| Column (short notation) | Unique entries (SetSketch) | Unique entries (real) | Error |
|---|---|---|---|
| t.id | 99555 | > 100000 | -0.45 % |
| k.id | 99614 | > 100000 | -0.39 % |
| mk.keyword_id | 22724 | > 100000 | -77.3 % |
| mk.movie_id | 20864 | > 100000 | -79.1 % |

Note that due to memory limitations the real number of unique entries was limited to 100000 entries in Tab. 5. It turns out that the estimates based on SetSketches for t.id, and k.id are quite accurate, whereas the estimates for mk.keyword_id, and mk.movie_id contain estimation errors.

In the next step, cardinality estimates for all join operations comprised in the join query JQ using the SetSketches drawn up above are calculated (steps 530 and 630). This results in the following table:

*Tab. 6 Cardinality estimates for intersections of tables*

| Joints | Cardinality estimate based on SetSketch |
|---|---|
| *t.id* n *mk.movie_id* | 13832 |
| *k.id* $\cap$ *mk.keyword_id* | 15034 |

For computing the cardinality estimates of the intersections of tables, the well-known inclusion-exclusion principle is used. E.g. the equation for estimating the cardinality of *t. id* n *mk.movie_id* is

$$|t.id \cap mk.movie\_id| = |t.id| + |mk.movie\_id| - |t.id \cup mk.movie_{id}|$$

A cardinality estimate for a SetSketch is obtained by the function cardinality, and the union of two tables is obtained by the function merge.

As the cardinality estimate based on SetSketch for the intersection of a first table t and a second table mk according to the join operation *t. id* n *mk.movie_id* is smaller than the cardinality estimate for the intersection between tables k and mk according to the join operation *k. id* n *mk.keyword_id,* the former join operation is selected as 1st join operation (step 540).

Note that according to Fig. 7a, the object is just to find the join operation having the lowest cardinality estimate (step 540). According to Fig. 7b, which describes a variant of the disclosed method, after having found the join operation having the lowest cardinality estimate (step 640), this join operation is executed thereby joining t.idmmk.movie_id (step 650).

Next, the steps according to Fig. 7a will be described.

In step 550, the join operation found is removed from the join query, such that the join query comprises only a single join operation, namely *k. id* n *mk.keyword_id.* In addition, the first table t and the second table mk as introduced in the previous join operation are replaced by the table *t. id* n *mk.movie_id* resulting from the previous join operation. The replacement is being done in the set of tables and in the join query. Before replacement, the set of tables comprises the tables k, mk, and t; after replacement the set of tables comprises the tables k, and twice the table *t. id* n *mk.movie_id.* However, as the set of tables is a set, multiple instances of the same element are disallowed, and the second instance of *t. id* n *mk.movie_id* is removed. Consequently, the set of tables comprises the tables k and *t. id* n *mk.movie_id* only. The join operation contained in the join query before the replacement is *k. id* n *mk.keyword_id.* After the replacement, the join operation in the join query is *k. id* n (*t.id* n *mk.movie_id*).

As there is only one join operation left in JQ, the remaining join operation. *id* n (*t.id* n *mk.movie_id*) is selected as the 2nd join operation.

The optimized join order is 1) join tables t and mk, where *t. id = mk.movie_id,* and 2) join the intermediate table *t* ⋈

*mk* resulting from the 1st join operation with table k, where *k.id* = ($t \bowtie mk$).*keyword_id.*

Next, the steps according to Fig. 7b will be described:

The steps 610-630 correspond to the steps 510-530 as described above. In step 640, the join operation t.id $\bowtie$ mk.movie_id having the lowest cardinality estimate is found and selected as 1st join operation. In step 650, this join operation is executed.

In step 660, the join operation just performed is removed from the joint query JQ and the joined tables are replaced by the joint of the tables. After this, a single join operation is left in JQ.

In step 670, the remaining join operation is selected as 2nd join operation.

Therefore, the optimized join order according to Fig. 7b is 1) join tables t and mk, where *t.id = mk.movie_id,* and 2) join the intermediate table *t* $\bowtie$ *mk* resulting from the 1st join operation with table k, where *k. id* = ($t \bowtie mk$).*keyword_id.*

In the application example based on the IMDB data set was shown how probabilistic SetSketch data structures can be used to optimize the order of join operations in order to minimize the size of intermediate tables.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A computer-implemented method for joining tables in a database system, comprising:

a) receiving, by a computer processor, a request to join three or more tables according to a join query, where the join query specifies a set of join operations and each join operation joins two tables with each other;

b) generating, by the computer processor, a probabilistic data structure for each table specified in the set of join operations, where the probabilistic data structure is partitioned into a plurality of registers and configuration parameters for the probabilistic data structure includes a first recording parameter, base, that controls recording of data into the probabilistic data structure;

c) for each join operation in the set of join operations, calculating, by the computer processor, a cardinality estimate of table resulting from a particular join operation using the probabilistic data structures for the tables to be joined;

d) selecting, by the computer processor, a join operation in the set of join operations, where the selected join operation has the lowest cardinality estimate amongst the join operations in the set of join operations;

e) removing, by the computer processor, the selected join operation from the set of join operations;

f) replacing, by the computer processor, the tables to be joined by the selected join operation with the joint of these tables in the set of join operations; and

g) repeating, by the computer processor, steps c) to f) until the set of join operations comprises a single join operation, thereby defining an order for joining tables in the join query.

2. The method of claim 1, wherein the probabilistic data structure is updated in accordance with the first recording parameter and a second recording parameter, rate, such that changing a value of the first recording parameter and changing the number of registers sets the maximum number of distinct data elements that can be represented by the probabilistic data structure.

3. The method of claim 2, wherein the value of the first recording parameter is greater than one and less than two.

4. The method of any one of the preceding claims, wherein calculating a cardinality estimate of table resulting from a particular join operation includes merging the probabilistic data structure for each table specified by the particular join operation.

5. The method of any one of the preceding claims, further comprising calculating a cardinality estimate using inclusion-exclusion principle.

6. The method of any one of the preceding claims, wherein selecting a join operation further comprises performing the selected join operation to form a new table and generating a probabilistic data structure for the new table.

7. The method of claim 6, wherein performing a selected join operation includes one of a hash join or a sort merge join.

8. The method of any one of the preceding claims, wherein the set of join operations involves multiple columns of a table and further comprises generating a probabilistic data structure for each column of the table specified in the set of join operations.

9. The method of any one of the preceding claims, wherein the probabilistic data structure is SetSketch data structure.

10. The method of any one of the preceding claims, 1 further comprising joining tables in the join query according to the order for joining tables.

11. A computer-implemented method for joining tables in a database system, comprising:

a) receiving, by a computer processor, a request to join three or more tables according to a join query, where the join query specifies a set of join operations and each join operation joins two tables with each other;

b) generating, by the computer processor, a probabilistic data structure for each table specified in the set of join operations, where the probabilistic data structure is partitioned into a plurality of registers and configuration parameters for the probabilistic data structure includes a first recording parameter, base, that controls recording of data into the probabilistic data structure;

c) for each join operation in the set of join operations, calculating, by the computer processor, a cardinality estimate of table resulting from a particular join operation using the probabilistic data structures for the tables to be joined;

d) selecting, by the computer processor, a join operation in the set of join operations, where the selected join operation has the lowest cardinality estimate amongst the join operations in the set of join operations;

e) performing, by the computer processor, the selected join operation to form a new table and generating a probabilistic data structure for the new table;

f) removing, by the computer processor, the selected join operation from the set of join operations;

g) replacing, by the computer processor, the tables to be joined with the new table in the set of join operations;

h) repeating, by the computer processor, steps c) to g) until the set of join operations comprises a single join operation, thereby joining tables in the join query.

12. The method of claim 11, wherein the probabilistic data structure is updated in accordance with the first recording parameter and a second recording parameter, rate, such that changing a value of the first recording parameter and changing the number of registers sets the maximum number of distinct data elements that can be represented by the probabilistic data structure.

13. The method of claim 12, wherein the value of the first recording parameter is greater than one and less than two.

14. The method of any one of claims 11 to 13, wherein calculating a cardinality estimate of table resulting from a particular join operation includes merging the probabilistic data structure for each table specified by the particular join operation.

15. The method of any one of claims 11 to 14, further comprising calculating a cardinality estimate using inclusion-exclusion principle.

# Fig. 1

```
                    ┌──────────┐
                    │  Start   │
                    └────┬─────┘
                         │
                         ▼
              ┌────────────────────┐
              │      Prepare       │          10
              │    SetSketches     │─────────╮
              └─────────┬──────────┘
                        │
                        ▼
              ┌────────────────────┐
              │     Calculate      │          20
         ┌───▶│ cardinality estimates │──────╮
         │    │ for all join operations │
         │    └─────────┬──────────┘
         │              │
         │              ▼
         │    ┌────────────────────┐
         │    │ Select join operation │        30
         │    │    with lowest      │─────────╮
         │    │ cardinality estimate │
         │    └─────────┬──────────┘
         │              │
         │              ▼
         │    ┌────────────────────┐
         │    │    Remove join     │          40
         │    │    operation       │─────────╮
         │    └─────────┬──────────┘
         │              │
         │              ▼
         │    ┌────────────────────┐
         │    │ Replace 1st and 2nd │          50
         │    │  tables by joint of │────────╮
         │    │  1st and 2nd tables │
         │    └─────────┬──────────┘
         │              │
         │              ▼
         │            ◇◇◇◇◇
         │          ◇       ◇
         │        ◇  ≥ 2 Join  ◇          60
    YES──┴───────◇ Operations  ◇─────────╮
                  ◇   left?    ◇
                    ◇       ◇
                      ◇◇◇◇◇
                        │
                        │ NO
                        ▼
              ┌────────────────────┐
              │  Select remaining  │          70
              │   join operation   │─────────╮
              └─────────┬──────────┘
                        │
                        ▼
                    ┌──────────┐
                    │   END    │
                    └──────────┘
```

# Fig. 2

| A | B | C |
|---|---|---|
| 1 | 1 | 2 |
| 2 | 1 | 3 |
| 3 | 2 | 4 |
| 4 | 3 | 5 |

| A∪B | A∪C | B∪C | A∪B∪C |
|-----|-----|-----|-------|
| 1 | 1 | 1 | 1 |
| 2 | 2 | 2 | 2 |
| 3 | 3 | 3 | 3 |
| 4 | 4 | 4 | 4 |
|   | 5 | 5 | 5 |

| A∩B | A∩C | B∩C | A∩B∩C |
|-----|-----|-----|-------|
| 1 | 2 | 2 | 1 |
| 2 | 3 | 3 | 2 |
| 3 |   |   |   |

# Fig. 3

A ——— B
C

# Fig. 4

```
                      ┌─────────┐
                      │  Start  │
                      └─────────┘
                           │
                           ▼
              ┌───────────────────────────┐
              │     SOT = {A, B, C}        │────── 110
              │    JQ = {A∩B, B∩C}         │
              └───────────────────────────┘
                           │
                           ▼
              ┌───────────────────────────┐
              │   Prepare SetSketches for  │
              │       tables in SOT:       │────── 120
              │    SK(A), SK(B), SK(C)     │
              └───────────────────────────┘
                           │
                           ▼
              ┌───────────────────────────┐
              │   Create SetSketches for   │
              │   unions defined in JQ:    │────── 130
              │     SK(A∪B), SK(B∪C)       │
              └───────────────────────────┘
                           │
                           ▼
              ┌───────────────────────────┐
              │    Caclulate cardinality   │
              │        estimates for       │────── 140
              │   SetSketches of tables    │
              │     and unions of tables   │
              └───────────────────────────┘
                           │
                           ▼
              ┌───────────────────────────┐
              │    Calculate cardinality   │
              │        estimates for       │────── 150
              │   intersections of tables  │
              └───────────────────────────┘
                           │
                           ▼
              ┌───────────────────────────┐
              │     Find join operation    │
              │  having lowest cardinality │────── 160
              │          estimate          │
              └───────────────────────────┘
                           │
                           ▼
              ┌───────────────────────────┐
              │      1st join operation:   │────── 170
              │        Join B and C        │
              │          → B∩C             │
              └───────────────────────────┘
                           │
                           ▼
              ┌───────────────────────────┐
              │     SOT = {A, B∩C}         │────── 180
              │    JQ = {A∩(B∩C)}          │
              └───────────────────────────┘  1 join operation left
                           │
                           ▼
              ┌───────────────────────────┐
              │     2nd join operation:    │────── 190
              │      Join A and B∩C        │
              │          → A∩B∩C           │
              └───────────────────────────┘
                           │
                           ▼
                      ┌─────────┐
                      │   END   │
                      └─────────┘
```

EP 4 530 880 A1

# Fig. 5a

Start

JQ = {A∩B, A∩C, B∩D}  — 210

Prepare SetSketches for
tables in JQ:
SK(A), SK(B), SK(C), SK(D)  — 220

Calculate cardinality estimates for
join operations in JQ  — 230

Find join operation having lowest
cardinality estimate: Assume A∩C
1st join:  A∩C  — 240

Remove join operation from JQ
and replace joined tables by A∩C
JQ = {A∩C∩B, B∩D}  — 250

Calculate cardinality estimates for
join operations in JQ  — 260

Find join operation having lowest
cardinality estimate: Assume B∩D
2nd join:  B∩D  — 270

Remove join operation from JQ
and replace joined tables by B∩D
JQ = {A∩C∩B∩D}  — 280

1 join
operation left

3rd join: (A∩C)∩(B∩D)  — 290

END

# Fig. 5b

Start

JQ = {A∩B, A∩C, B∩D} — 310

Prepare SetSketches for tables in JQ:
SK(A), SK(B), SK(C), SK(D) — 320

Calculate cardinality estimates for join operations in JQ — 330

Find join operation having lowest cardinality estimate: Assume A∩C
1st join: A⋈C — 340

Perform join operation
A⋈C=Joint of A and C — 350

Prepare SetSketch for A⋈C — 360

Remove join operation from JQ and replace joined tables by A⋈C
JQ = {A⋈C∩B, B∩D} — 370

Calculate cardinality estimates for join operations in JQ — 380

Find join operation having lowest cardinality estimate: Assume B∩D
2nd join: B⋈D — 390

Perform join operation
B⋈D=Joint of B and D — 400

Prepare SetSketch for B⋈D — 410

Remove join operation from JQ and replace joined tables by B⋈D
JQ = {A⋈C∩B⋈D} — 420

1 join operation left

3rd join: (A⋈C)⋈(B⋈D) — 430

END

# Fig. 6

### keyword / k

| Line # | id [int] | keyword [char] | phonetic_code [char] |
|---|---|---|---|
| 1 | 2068 | ... | H5321 |
| | ⋮ | ... | |
| 134170 | 132745 | seventeen-word-title | S1535 |

SK(k.id)

SK(mk.keyword_id)

### movie_keyword / mk

| Line # | id [int] | movie_id [int] | keyword_id [int] |
|---|---|---|---|
| 1 | 1 | 2 | 1 |
| ⋮ | ⋮ | ⋮ | |
| 4523930 | 4523930 | 2525283 | 121 |

SK(mk.movie_id)

### title / t

| Line # | id [int] | title [char] | ... | md5sum [char] |
|---|---|---|---|---|
| 1 | 80889 | (#1.66) | ... | 4de45f35edf0b753c54ab72dcbe68bb5 |
| | ⋮ | | ... | ⋮ |
| 2528312 | 2528271 | Tomorow's Youth | ... | 2642270987569d05550215065ead71b8 |

SK(t.id)

# Fig. 7a

Start

JQ = {t.id∩mk.movie_id,
k.id∩mk.keyword_id} — 510

Prepare SetSketches for
tables in JQ:
SK(t.id), SK(mk.movie_id),
SK(k.id), SK(keyword_id) — 520

Calculate cardinality estimates for join
operations in JQ — 530

Find join operation having
lowest cardinality estimate:
1st join: t.id∩mk.movie_id — 540

Remove join operation from JQ and replace
joined tables by t.id∩mk.movie_id:
JQ = {k.id∩(t.id∩mk.movie_id)} — 550

1 join
operation left

2nd join: k.id∩(t.id∩mk.movie_id) — 560

END

# Fig. 7b

```
                        ┌─────────┐
                        │  Start  │
                        └─────────┘
                             │
                             ▼
        ┌──────────────────────────────────────┐
        │   JQ = {t.id∩mk.movie_id,            │  ⟋ 610
        │         k.id∩mk.keyword_id}           │
        └──────────────────────────────────────┘
                             │
                             ▼
        ┌──────────────────────────────────────┐
        │        Prepare SetSketches for        │
        │             tables in JQ:             │  ⟋ 620
        │     SK(t.id), SK(mk.movie_id),        │
        │       SK(k.id), SK(keyword_id)        │
        └──────────────────────────────────────┘
                             │
                             ▼
        ┌──────────────────────────────────────┐
        │  Calculate cardinality estimates for  │  ⟋ 630
        │         join operations in JQ          │
        └──────────────────────────────────────┘
                             │
                             ▼
        ┌──────────────────────────────────────┐
        │      Find join operation having       │
        │     lowest cardinality estimate:      │  ⟋ 640
        │     1st join: t.id⋈mk.movie_id        │
        └──────────────────────────────────────┘
                             │
                             ▼
        ┌──────────────────────────────────────┐
        │        Perform join operation         │  ⟋ 650
        │         t.id⋈mk.movie_id              │
        └──────────────────────────────────────┘
                             │
                             ▼
        ┌──────────────────────────────────────┐
        │  Remove join operation from JQ and replace │  ⟋ 660
        │   joined tables by t.id⋈mk.movie_id:  │
        │ JQ = {k.id∩(t.id⋈mk.movie_id).keyword_id} │  ⟍ 1 join
        └──────────────────────────────────────┘      operation left
                             │
                             ▼
        ┌──────────────────────────────────────┐
        │              2nd join:                │  ⟋ 670
        │  k.id⋈(t.id⋈mk.movie_id).keyword_id   │
        └──────────────────────────────────────┘
                             │
                             ▼
                        ┌─────────┐
                        │   END   │
                        └─────────┘
```

Europäisches
Patentamt

European
Patent Office

Office européen
des brevets

# EUROPEAN SEARCH REPORT

Application Number

EP 24 20 1022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YESDAULET IZENOV ET AL: "Online Sketch-based Query Optimization", ARXIV.ORG, CORNELL UNIVERSITY LIBRARY, 201 OLIN LIBRARY CORNELL UNIVERSITY ITHACA, NY 14853, 4 February 2021 (2021-02-04), XP081874902, | 1,4-11, 14,15 | INV. G06F16/2453 G06F16/2455 |
| A | * abstract; figures 1-2 * <br> * figures 4-5 * <br> * page 7, paragraph 4.1.1 - page 8, paragraph 4.1.2 * <br> * page 10, paragraph 4.2.2 * <br> * page 11, paragraph 5.2 * <br> * page 10 * <br> * page 18, paragraph 7.2.1 * <br> ----- | 2,3,12, 13 | |
| A | MULLER MAGNUS ET AL: "Memory-Efficient Key/Foreign-Key Join Size Estimation via Multiplicity and Intersection Size", 2021 IEEE 37TH INTERNATIONAL CONFERENCE ON DATA ENGINEERING (ICDE), IEEE, 19 April 2021 (2021-04-19), pages 984-995, XP033930175, DOI: 10.1109/ICDE51399.2021.00090 [retrieved on 2021-06-16] * abstract; figure 2 * * page 986, paragraph A - page 988 * ----- | 1-15 | |

TECHNICAL FIELDS SEARCHED (IPC)

G06F

The present search report has been drawn up for all claims

| Place of search | Date of completion of the search | Examiner |
|---|---|---|
| Berlin | 14 February 2025 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63539038
- US 10824592 B2
- US 20190073398 A1
- US 10853368 B2

### Non-patent literature cited in the description

- **OTMAR ERTL**. SetSketch: Filling the Gap between MinHash and HyperLogLog. *PVLDB*, 2021, vol. 14 (11), 2244-2257